(19) Europäisches Patentamt

European Patent Office

Office européen des brevets

(11) **EP 1 301 440 B1**

(12) **FASCICULE DE BREVET EUROPEEN**

(45) Date de publication et mention
de la délivrance du brevet:
**16.03.2005 Bulletin 2005/11**

(21) Numéro de dépôt: **01955401.3**

(22) Date de dépôt: **11.07.2001**

(51) Int Cl.$^7$: **C02F 3/06**, C02F 3/10

(86) Numéro de dépôt international:
**PCT/FR2001/002241**

(87) Numéro de publication internationale:
**WO 2002/006165 (24.01.2002 Gazette 2002/04)**

(54) **REACTEUR BIOLOGIQUE A LIT FIXE IMMERGE ET PROCEDE DE TRAITEMENT D'EFFLUENTS LIQUIDES**

BIOLOGISCHER FESTBETTREAKTOR UND VERFAHREN ZUR ABWASSERBEHANDLUNG

IMMERSED FIXED BED BIOLOGICAL REACTOR AND METHOD FOR TREATING LIQUID EFFLUENTS

(84) Etats contractants désignés:
**BE DE ES FR GB IT**

(30) Priorité: **17.07.2000 FR 0009328**

(43) Date de publication de la demande:
**16.04.2003 Bulletin 2003/16**

(73) Titulaire: **CFPI NUFARM**
**92233 Gennevilliers (FR)**

(72) Inventeurs:
• **PELLET, Stéphane**
**F-78510 Triel/Seine (FR)**
• **HADZAMANN, Eric**
**F-60260 La Morlaye (FR)**
• **CHEMINAUD, Jean-Claude**
**F-95220 Herblay (FR)**

(74) Mandataire: **Touati, Catherine**
**Cabinet Plasseraud**
**65/67 rue de la Victoire**
**75440 Paris Cedex 09 (FR)**

(56) Documents cités:
**DE-A- 2 002 926**    **DE-A- 3 503 723**
**US-A- 5 143 618**

## Description

La présente invention porte sur un réacteur biologique à lit fixé immergé destiné à l'élimination des polluants essentiellement solubles des effluents liquides sous l'action de bactéries comportées par le réacteur et susceptibles de digérer les composés organiques des effluents à traiter. Elle porte aussi sur un procédé de traitement d'effluents liquides mettant en oeuvre un tel réacteur.

Il est connu d'utiliser des réacteurs biologiques pour le traitement des effluents liquides et plus particulièrement des eaux usées d'origine industrielle ou urbaine, en vue de la diminution de la DCO. En particulier, on a proposé trois types de réacteurs biologiques apparus chronologiquement dans l'ordre dans lequel ils sont cités :

- des réacteurs dans lesquels les bactéries sont en suspension,
- des réacteurs à lit fixé à ruissellement dans lesquels les bactéries sont fixées sur des supports sur lesquels on fait ruisseler les effluents liquides à traiter,
- des réacteurs à lit fixé immergé, dans lesquels les bactéries sont fixées sur des supports eux mêmes immergés dans les effluents à traiter.

La demande de brevet EP853067 décrit un réacteur à lit fixé immergé de la dernière génération qui présente une structure spécifique permettant une aération optimale. En effet, dans ce réacteur, le support des bactéries consiste en un disque rotatif qui présente à tout moment de la rotation une partie immergée et une partie émergée en contact avec l'air environnant permettant une aération optimale.

Ces dispositifs connus, notamment ceux de la première génération, présentent l'inconvénient d'être très volumineux; les réacteurs à lit fixé de la deuxième génération présentent l'inconvénient supplémentaire de requérir des équipements complémentaires, nécessaires pour assurer le maintien des conditions hydrauliques requises (recyclage de l'eau, lavages, colmatages, etc....); de plus les dispositifs des première et deuxième générations sont de gros consommateurs d'énergie.

Les réacteurs de la troisième génération présentent un progrès par rapport aux réacteurs des première et deuxième générations mais ne sont toujours pas satisfaisants sur le plan du rendement et de la charge admissible.

Sachant que par DCO on désigne le Demande Chimique en Oxygène, le rendement d'un réacteur est le rapport entre la DCO éliminée et la DCO initiale, c'est à dire :

$$Rendement= (DCO_{initiale} - DCO_{finale})/ DCO_{initiale}$$

Et on entend par charge admissible ou charge surfacique le rapport suivant:

$$(DCO (kg\ O_2\ /surface\ de\ support\ (m^2))\ .\ Jour.$$

De plus, les réacteurs connus de la troisième génération nécessitent l'installation en sortie de réacteur d'un clarificateur avant le rejet de l'eau traitée dans la nature. En outre ils ne sont pas adaptés pour traiter des rejets dont le rapport de biodégradabilité DCO/DEO-, DBO. étant la demande biologique en oxygène en 5 jours, ce rapport devant être au minimum de 0,5.

L'invention a pour but, surtout de remédier à ces inconvénients et, en particulier, de fournir un réacteur compact pouvant se loger dans un espace restreint tout en présentant des performances de traitement optimisées.

Le réacteur biologique à lit fixé immergé confirme à l'invention comprend au moins une cuve destinée à être remplie des effluents à traiter dans lesquels sont immergés des supports de bactéries, ce réacteur qui est équipé de moyens d'aération disposés dans la partie inférieure de la cuve étant caractérisé par le fait que les supports de bactéries ont une surface spécifique supérieure ou égale à 100 $m^2/m^3$, de préférence supérieure à 125 $m^2/m^3$ et un pourcentage de vide supérieur à 90%, de préférence supérieur à 95%, ce réacteur présentant de plus au moins l'une des caractéristiques supplémentaires suivantes résidant respectivement dans le fait :

- qu'il comporte des moyens propres à permettre l'obtention d'une circulation en boucle des effluents à l'intérieur d'au moins l'une des cuves,
- que les moyens d'aération dont il est équipé, sont sélectionnés de façon telle qu'ils soient capables de créer dans le milieu réactionnel, c'est à dire dans les eaux chargées en bactéries et en effluents à traiter, une concentration en oxygène supérieure à 6ppm, de préférence supérieure à 7,5ppm,
- qu'il comporte des moyens de neutralisation de l'acidité du milieu réactionnel, autrement dit de réglage de la valeur du pH en cours de réaction.

Grâce à la présence d'au moins l'une des trois caractéristiques supplémentaires ci-dessus identifiées, on obtient à charge surfacique constante, un rendement d'élimination de la DCO augmenté d'au moins 5 à 10% par rapport à celui des réacteurs connus et il devient possible d'admettre, à rendement équivalent, une charge surfacique au moins deux fois supérieure à celle admissible dans les réacteurs connus.

De plus le réacteur conforme à l'invention est adapté pour le traitement d'effluents présentant un rapport de biodégradabilité très défavorable, c'est à dire inférieur à 0,5.

Selon un mode de réalisation avantageux, le réacteur conforme à l'invention comprend deux cuves de façon à améliorer encore le rendement global d'élimination de la DCO à charge surfacique constante ou d'augmenter la charge surfacique admissible à rendement constant. Dans ce mode de réalisation, il est particulièrement avantageux de disposer les moyens de réglage du pH en sortie de la première cuve.

La circulation des effluents de la première cuve vers la seconde est réalisée par des moyens connus de l'homme du métier, et de façon avantageuse par sous-verse ou sur-verse. Pour obtenir un temps de séjour maximal dans la cuve, les effluents, s'ils sont amenés dans la première cuve au niveau de sa partie supérieure, on les achemine dans la seconde cuve par sous-verse, et inversement, s'ils sont amenés dans la première cuve au niveau de sa partie inférieure, on les achemine dans la seconde cuve par sur-verse.

Selon un autre mode de réalisation avantageux, il est possible de rajouter d'autres cuves de traitement afin d'augmenter encore le rendement de diminution de la DCO à charge surfacique constante ou d'augmenter la charge surfacique admissible à rendement constant.

Il n'existe théoriquement pas de limitation quant au nombre possible de cuves installées en série. Cependant, pour des raisons évidentes de coût, et pour obtenir un bon compromis technico-économique, on se limitera en général à un maximum de six cuves. Des résultats tout à fait intéressants sont obtenus avec trois cuves placées en série.

Selon un mode de réalisation particulièrement avantageux, le réacteur comprend donc trois cuves placées en série et comportant toutes des supports de bactéries présentant une surface spécifique supérieure ou égale à 100 $m^2/m^3$, de préférence supérieure à 125 $m^2/m^3$, un pourcentage de vide supérieur à 90%, de préférence supérieur à 95% et des moyens d'aération placés en bas de chaque cuve.

On désigne par « surface spécifique » le rapport entre la somme des surfaces de chaque support de bactéries et le volume apparent du médium, c'est-à-dire le volume du réacteur occupé par la structure constituée de supports unitaires de bactéries fixés entre eux.

On désigne par « pourcentage de vide » la différence entre le volume apparent du médium et son volume réel ramenée en pourcentage du volume apparent.

Les moyens d'aération peuvent être constitués comme indiqué ci-après.

Dans la première cuve on dispose des moyens permettant la recirculation des effluents.

Ces moyens de recirculation peuvent être constitués comme indiqué ci-après.

Les effluents à traiter sont maintenus en circulation dans la première cuve puis ils sont transférés par sous-verse ou sur-verse dans la seconde cuve, après neutralisation de leur acidité puis ils sont transférés par sous-verse ou sur-verse vers une troisième cuve dans laquelle la purification est finalisée et dans laquelle s'effectue une clarification.

A la sortie du réacteur, on récupère une eau clarifiée débarrassée de la majeure partie de la pollution soluble.

Les moyens d'aération sont sélectionnés de façon à ce que la concentration en oxygène dans le milieu réactionnel, c'est-à-dire dans les eaux chargées circulant dans les espaces formés entre les supports de bactéries, soit supérieure à environ 6ppm, de préférence 7,5ppm. De tels moyens d'aération sont constitués par une soufflante qui envoie de l'oxygène dans des diffuseurs fines bulles disposés parallèlement les uns aux autres et fixés sur toute la surface du fond de la cuve.

Dans le réacteur conforme à l'invention, le support des bactéries est choisi parmi les supports de bactéries classiques qui présentent simultanément une surface spécifique supérieure ou égale à 100 $m^2/m^3$, de préférence supérieure à 125 $m^2/m^3$ et un pourcentage de vide supérieur à 90%, de préférence supérieur à 95%.

De façon avantageuse de tels supports sont des supports en vrac et en matière plastique. Selon un mode de réalisation particulièrement avantageux, de tels supports sont des écuvillons ou goupillons en polypropylène.

Les moyens de réglage du pH peuvent être constitués par une ligne de régulation de pH placée, de préférences, entre deux cuves, de façon avantageuse entre la première et la seconde cuve.

Une ligne de régulation du pH comprend un capteur relié à un pH-mètre, un transmetteur du signal émis par le capteur et un organe de régulation auquel est transmis le signal et qui peut être constitué par une vanne d'introduction d'agent neutralisant.

A l'aide de cette ligne de régulation le pH est ramené à une valeur généralement inférieure à 7,5 et, de préférence, comprise entre 6,5 et 7.

Les moyens de recirculation des effluents à l'intérieur d'une cuve sont constitués par exemple par une pompe qui aspire un certain volume d'effluents dans la partie basse de la cuve puis le réintroduit dans la partie supérieure opposée de la cuve.

Le réacteur conforme à l'invention va être décrit plus en détail à l'aide des figures sur lesquelles :

La figure 1 est une coupe schématique longitudinale d'un réacteur biologique conforme à l'invention agencé suivant un mode de réalisation avantageux ;
La figure 2 est une coupe schématique longitudinale d'un réacteur biologique conforme à un second mode de réalisation de l'invention dans lequel les cuves sont cylindriques.

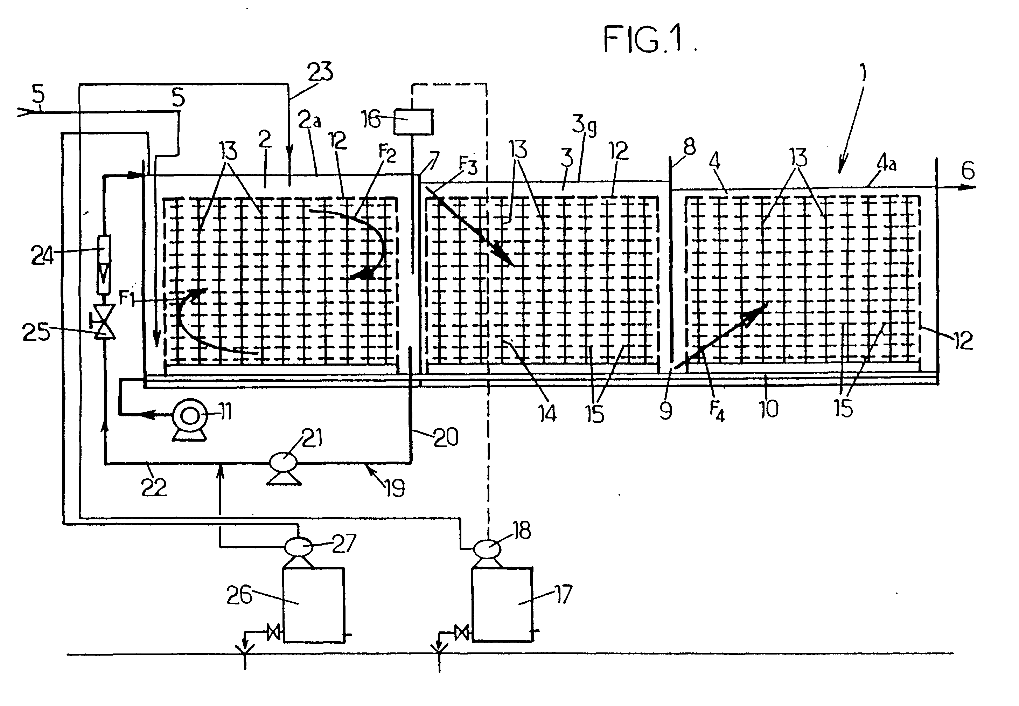

Sur la figure 1, le réacteur biologique est désigné dans son ensemble par 1 et comprend trois compartiments 2, 3 et 4 placés en série, chacun de ces compartiments matérialisant une cuve.

Les parois de chacune des cuves sont constituées par les parois du réacteur et par deux cloisons respectivement 7 en 8 séparant respectivement les compartiments 2 et 3 et 3 et 4.

Les effluents à traiter sont acheminés dans le compartiment 2 par une canalisation 5 qui débouche à la partie inférieure du compartiment 2; ces effluents sont mis en circulation à l'intérieur de ce compartiment 2 comme indiqué ci-dessus par une pompe suivant un trajet approximativement matérialisé par les flèches $F_1$ et $F_2$.

Le niveau supérieur de l'effluent dans le compartiment 2 est montré en 2a.

Les effluents passent du compartiment 2 vers le compartiment 3 par sur-verse, circulent dans le compartiment 3 dans lequel leur niveau supérieur est matérialisé en 3a en suivant un trajet approximativement représenté par la flèche F3 puis passent dans le compartiment 4 par sous-verse grâce à un passage 9 ménagé entre la cloison 8 et le fond du réacteur.

Le trajet des effluents dans le compartiment 4 est matérialisé par la flèche $F_4$ et leur niveau dans ce compartiment est montré en 4a.

A la surface du fond du réacteur est disposée une installation d'insufflation d'air atmosphérique globalement désignée par 10 et alimentée par une soufflante 11.

Les effluents quittent le compartiment 4 par sur-verse et sont rejetés par une canalisation 6.

Dans chacun des compartiments 2, 3 et 4 est disposé un panier globalement désigné par 12 comportant des supports de bactéries 13. Ces supports de bactéries sont des goupillons ou écuvillons de polypropylène présentant un axe central 14 disposé verticalement dans le panier et sur lequel sont disposés perpendiculairement à l'axe 14 des brins 15 de section transversale circulaire.

Les supports sont placés dans chacun des paniers de façon à ce que les axes centraux 14 soient verticaux et parallèles entre eux. Le nombre de goupillons par panier et la distance entre les goupillons sont déterminés de façon telle qu'on obtient simultanément une surface spécifique de $125 m^2/m^3$ et un pourcentage de vide de 95%.

Un dispositif 16 de mesure du pH est disposé à proximité de la zone dans laquelle a lieu le passage par sur-verse du compartiment 2 vers le compartiment 3. Ce dispositif est relié à un réservoir 17 d'agent neutralisant tel que de la soude, lui même équipé d'une pompe 18 permettant d'acheminer ledit agent à l'intérieur du compartiment 2.

Un dispositif 19 permet de faire circuler en boucle les effluents au sein de la première cuve 2. Ce dispositif 19 comporte une canalisation 20 dont l'extrémité ouverte est placée à l'intérieur de la cuve 2 à proximité de la cloison 7 et dans la partie inférieure de la cuve, une pompe 21 reliant la canalisation 20 et une canalisation 22, permettant d'aspirer les effluents, de les acheminer à travers la canalisation 22 jusqu'à l'entrée supérieure 23 de la cuve 2 où ils sont à nouveau admis dans le réacteur, des moyens de contrôle du débit 24 disposés sur la canalisation 22 et une vanne de réglage 25 permettant de régler le débit admis dans la cuve 2.

Un réservoir 26 contenant les nutriments nécessaires aux bactéries est muni d'une pompe 27 et est relié à la canalisation 22. Ainsi, les nutriments sont apportés dans le circuit permettant la circulation en boucle des effluents dans la cuve 2.

Le procédé de traitement des effluents à l'aide du réacteur biologique conforme à l'invention, va maintenant être décrit à l'aide de la figure 1.

Les effluents à traiter 5 sont amenés dans la première cuve 2 qui se remplit, puis les cuves 3 et 4 se remplissent à leur tour. Quand le niveau des effluents a atteint la limite supérieure 2a, 3a et 4a dans chaque compartiment, le réacteur est alors dans son état de fonctionnement. Les effluents 5 sont introduits à flux constant dans le réacteur et les effluents traités 6 sortent à flux constant de la cuve 4.

Les bactéries fixées sur les supports digèrent les composés organiques des effluents faisant ainsi diminuer la DCO. L'activité bactérienne aérobie est rendue possible par la présence d'oxygène dans le milieu réactionnel. L'oxygène est délivré par les amenées 10 d'oxygène placées au fond de la cuve et disposées de telle façon que la concentration en oxygène dans les eaux chargées soit d'environ 8ppm.

Les effluents à traiter 5 sont acheminés dans le réacteur au niveau de la cuve 2 dans l'espace délimité par le bord latéral de la cuve et le panier 12 disposé dans la cuve 2 à proximité du fond de la cuve. Ces effluents sont forcés à circuler en boucle à l'intérieur de la cuve 2 au moyen d'un système 19 comprenant une aspiration des effluents placée en bas de la cuve 2 au voisinage de la cloison 7 séparant la cuve 2 de la cuve 3. Les effluents ainsi aspirés sont réintroduits à l'entrée 23 du réacteur, c'est à dire dans la partie supérieure de la cuve 2. Cette aspiration et: cette réintroduction forcées des effluents imposent une circulation en boucle des effluents à l'intérieur de la cuve 2 suivant les flèches F1 et F2.

Les effluents sont acheminés dans la seconde cuve 3 par sur-verse. Cependant, au préalable, une mesure du pH des effluents en sortie de la cuve 2 a été effectuée et un ajustement fait automatiquement par ajout de soude dans la cuve 2 en sa partie supérieure afin d'avoir un pH compris entre 6,5 et 7.

Les effluents sont acheminés de la deuxième cuve 3 vers la troisième cuve 4 par sous-verse, par le passage 9 ménagé entre la cloison 8 et le fond du réacteur.

Les effluents débarrassés de la majeure partie des polluants solubles sont soutirés au niveau de la partie supérieure de la cuve 4 du réacteur.

Le cheminement forcé des effluents dans le réacteur permet d'obtenir un temps de séjour optimal des effluents.

Le passage dans la troisième cuve 4 permet non seulement de finaliser la purification mais également de clarifier la solution. Ainsi, les effluents 6 sortant du réacteur ne sont pas troubles et peuvent être rejetés directement dans la nature ou bien être rejetés après avoir subi une étape supplémentaire de décantation ou filtration si la concentration en matières en suspension exigée est inférieure à 50ppm.

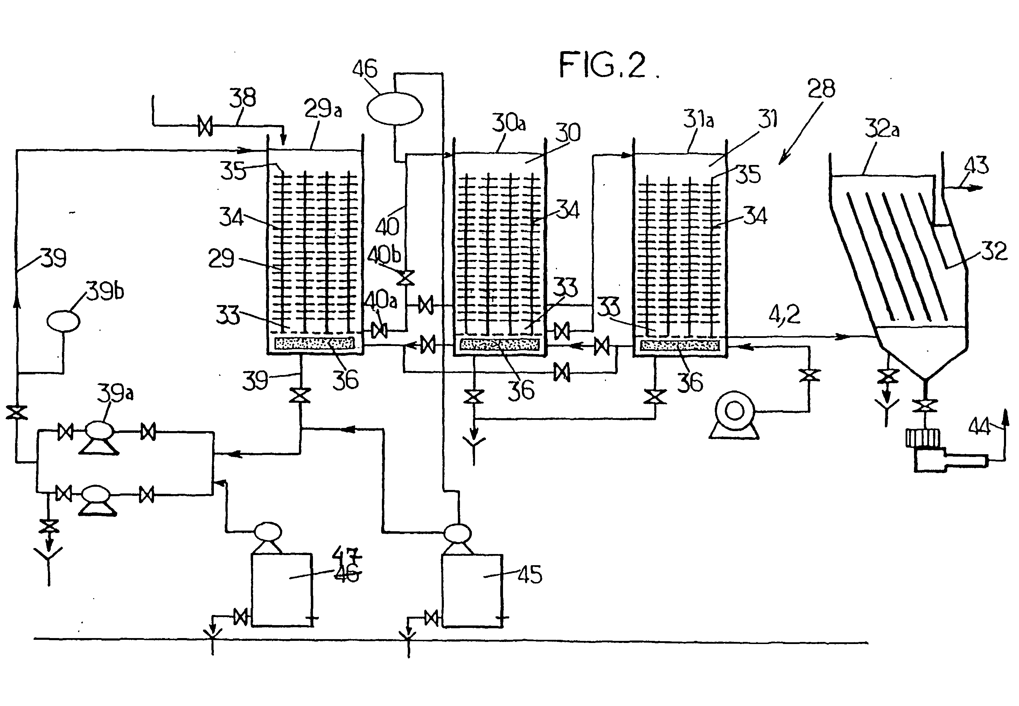

Sur la figure 2 est représenté un second mode de réalisation d'un réacteur biologique conforme à l'invention, qui est désigné dans son ensemble par 28 et qui comprend trois cuves cylindriques séparées l'une de l'autre 29, 30 et 31 et un clarificateur 32, placés en série.

Dans chaque cuve 29, 30, 31 est disposé un cahier globalement désigné par 33 comprenant des supports de bactéries 34 qui sont des goupillons ou écuvillons comme décrits ci-dessus en lien avec la figure 1.

Ces goupillons sont disposés de façon à ce que leur axe central 35 soit parallèle à l'axe central des cuves cylindriques et de façon telle que l'on obtienne simultanément une surface spécifique de $125m^2/m^3$ et un pourcentage de vide de 95%.

Au fond de chacune des cuves 29, 30 et 31, au dessous du panier 33, est placée une installation d'insufflation d'air atmosphérique permettant d'insuffler de l'oxygène sous forme de fines bulles, globalement désignée par 36, cette installation est alimentée par un système d'alimentation en air surpressé 37.

Les effluents à traiter sont acheminés dans la cuve 29 par une canalisation 38 qui débouche au niveau de la partie supérieure de la cuve 29, les effluents sont mis en circulation à l'intérieur de la cuve 29 par un système de canalisation 39 et pompe 39a qui permet de soutirer les effluents dans la partie inférieure de la cuve 29 et de les réintroduire au niveau de la partie supérieure de la cuve 29.

Le niveau supérieur des effluents dans la cuve 29 est montré en 29a.

Les effluents sont acheminés de la cuve 29 dans la cuve 30 par une canalisation 40 munie de vannes 40a et 40b.

La canalisation 40 relie la partie inférieure de la cuve 29 à la partie supérieure de la cuve 30. Les effluents sont donc acheminés dans la cuve 30 en sa partie supérieure où ils circulent vers la partie inférieure de la cuve 30 et sont acheminés vers la cuve 31 par la canalisation 41 reliant la partie inférieure de la cuve 30 à la partie supérieure de la cuve 31. Le niveau supérieur des effluents dans les cuves 30 et 31 est montré respectivement en 30a et 31a.

Dans la cuve 31, les effluents circulent de la partie supérieure vers la partie inférieure où ils sont évacués par la canalisation 42 vers le clarificateur 32.

Dans le clarificateur 32, le niveau supérieur des effluents est matérialisé en 32a. Les effluents décantent, la partie supérieure des effluents épurés est évacuée par la sertie 43 et les boues de décantation qui se déposent dans la partie inférieure du clarificateur 32 peuvent être récupérées dans le dispositif 44 placé au-dessous du clarificateur 32.

Comme dans le mode de réalisation de la figure 1, le réacteur de la figure 2 comporte des moyens de régulation du pH et des moyens d'amenée de nutriments pour les bactéries.

Les moyens de régulation du pH sont constitués d'un réservoir d'agent neutralisant 45 et d'un dispositif de mesure du pH 46 disposé sur la canalisation 40 reliant la cuve 29 à la cuve 30. L'introduction d'agent de neutralisation se fait au niveau de la cuve 29 à l'aide du circuit de recirculation (39, 39a).

De la même façon, les nutriments, soutirés du réservoir de nutriments 47 sont acheminés dans la cuve 29 par l'intermédiaire du circuit de recirculation (39, 39a).

Le circuit de recirculation (39, 39a), dispose d'un moyen 39b permettant le contrôle de la charge hydraulique dans la cuve 29.

Le procédé de traitement des effluents à l'aide du réacteur biologique de la figure 2, va maintenant être décrit.

Les effluents à traiter sont amenés dans la première cuve 29 qui se remplit, puis les cuves 30 et 31 se remplissent à leur tour, ainsi que le clarificateur 32. Quand le niveau des effluents a atteint la limite supérieure 29a, 30a et 31a dans chaque cuve, et 32a dans le clarificateur, le réacteur est alors dans son état de fonctionnement. Les effluents sont introduits à flux constant dans le réacteur et les effluents traités sortent à flux constant du clarificateur 32.

Les bactéries fixées sur les supports digèrent les composés organiques des effluents faisant ainsi diminuer la DCO. L'activité bactérienne aérobie est rendue possible par la présence d'oxygène dans le milieu réactionnel. L'oxygène est délivré par les amenées 36 d'air atmosphérique placées au fond de chaque cuve et disposées de telle façon que la concentration en oxygène dans les eaux chargées soit d'environ 8ppm.

Les effluents à traiter sont acheminés dans le réacteur au niveau de la cuve 29. Ces effluents sont forcés à circuler en boucle à l'intérieur de la cuve 29 au moyen d'un système 39-39a comprenant une aspiration des effluents placée en bas de la cuve 2. Les effluents ainsi aspirés sont réintroduits dans la partie supérieure de la cuve 29. Cette aspiration et cette réintroduction forcées des effluents imposent une circulation en boucle des effluents à l'intérieur de la cuve 29.

Les effluents sont acheminés dans la seconde cuve par la canalisation 40.

Une mesure du pH des effluents en sortie de la cuve 29 est effectuée et un ajustement fait automatiquement par ajout de soude dans la cuve 29 afin d'avoir un pH compris entre 6,5 et 7.

Les effluents sont acheminés de la deuxième cuve 30 vers la troisième cuve 31.

les effluents débarrassés de la majeure partie des polluants solubles sont soutirés au niveau de la partie inférieure de la cuve 31 du réacteur et acheminés par la canalisation 42 vers le clarificateur 32.

Dans le clarificateur 32, les eaux épurées sont évacuées par la sortie 43 placée au niveau supérieur du clarificateur et les boues de décantation sont évacuées de la partie inférieure du clarificateur vers le dispositif 44 où elles sont récupérées et éventuellement incinérées

L'invention porte également sur un procédé de traitement d'effluents liquides chargés en polluants. Le procédé est un procédé biologique selon lequel les effluents à traiter sont placés dans un réacteur biologique à lit fixe immergé comprenant des moyens d'aération des effluents et sont mis en contact avec des bactéries capables de digérer les polluants caractérisé par le fait que les bactéries qui peuvent proliférer sur des supports présents dans le réacteur qui sont tels qu'ils présentent simultanément une surface spécifique supérieure ou égale à $100m^2/m^3$, de préférence supérieure ou égale à $125m^2/m^3$ et un pourcentage de vide supérieur à 90%, de préférence supérieur à 95%.

Selon un mode de réalisation avantageux du procédé conforme à l'invention, les effluents chargés à traiter sont additionnés d'oxygène à une concentration supérieure à 6 ppm, de préférence supérieure à 7,5 ppm.

Selon un autre mode de réalisation avantageux du procédé conforme à l'invention, le pH du milieu réactionnel est réglé en cours de réaction.

L'invention va maintenant être décrite plus en détail à l'aide de l'exemple ci-après donné à titre d'illustration seulement.

EXEMPLE

A l'aide du réacteur de la figure 2, on traite 1000 l/j d'eaux usées générées par un garage. Ces eaux usées sont relativement claires (MeS<500 mg/l) et présentent une DCO allant jusqu'à 15000 $mg0_2$/l et un rapport de biodégradabilité $DB0_5$/DCO très défavorable, de l'ordre de 0,1, ($DBO_5$ représentant la demande biologique en oxygène en 5 jours).

Le support de bactéries utilisé est identique dans chacune des cuves 29, 30 et 31, et présente une surface spécifique de $125m^2/m^3$ et un pourcentage de vide de 95%.

La charge volumique de la cuve 29 est de 16,2 kgDCO/$m^3$. j, celle de la cuve 30 de 3,4 kgDCO/$m^3$. j et celle de la cuve 31 de 2,5 kgDCO/$m^3$.j. La charge surfacique de la cuve 29 est de 127,3 gDCO/$m^2$.j, celle de la cuve 30 de 26,9 gDCO/$m^2$.j et celle de la cuve 31 de 19,8 gDCO/$m^2$.j.

La charge volumique globale est de 4,6 kg DCO/$m^3$.J et la charge surfacique globale de 36 gDCO/$m^2$.j.

Différents essais de traitement ont été réalisés avec des eaux usées présentant une DCO initiale de 13000, 13500, 14000, 14500 et 15000 mg/l.

Pour chacun des essais on a indiqué dans le tableau ci-dessous les temps de séjour dans chaque cuve, la concentration en DCO et le rendement en sortie de chaque cuve ainsi que le rendement d'épuration global.

Il ressort de cet exemple qu'il est possible de traiter des eaux usées présentant une DCO de 15000mg/l avec une charge surfacique de 36aDCO/$m^2$.j en obtenant un rendement d'élimination de la DCO très satisfaisant de 87,5%.

EP 1 301 440 B1

| DCO entrante | | temps de séjour | | Cuve 29 | | Cuve 30 | | Cuve 31 | | Réacteur | |
|---|---|---|---|---|---|---|---|---|---|---|---|
| Concentration | flux | total | dans chaque cuve | concentration | rendement | concentration | rendement | concentration | rendement | rendement | DCO résiduelle |
| mg/l | kg/l | h:mn | h: mn | DCO ppm | % | DCO ppm | % | DCO ppm | % | % | kg/j |
| 13000 | 13,0 | 86:27 | 4:49 | 2743 | 78,9 | 2027 | 26,1 | 1624 | 19,9 | 87,5 | 1,6 |
| 13500 | 13,5 | 86:27 | 4:49 | 2849 | 78,9 | 2105 | 26,1 | 1686 | 19,9 | 87,5 | 1,7 |
| 14000 | 14,0 | 86:27 | 4:49 | 2954 | 78,9 | 2183 | 26,1 | 1749 | 19,9 | 87,5 | 1,7 |
| 14500 | 14,5 | 86:27 | 4:49 | 3060 | 78,9 | 2261 | 26,1 | 1811 | 19,9 | 87,5 | 1,8 |
| 15000 | 15,0 | 86:27 | 4:49 | 3165 | 78,9 | 2339 | 26,1 | 1873 | 19,9 | 87,5 | 1,9 |

**Revendications**

1. Réacteur biologique à lit fixé immergé comprenant au moins une cuve destinée à être remplie d'effluents à traiter dans lesquels sont complètement immergés des supports de bactéries, ce réacteur qui est équipé de moyens d'aération disposés dans la partie inférieure de la cuve étant **caractérisé par le fait que** les supports de bactéries ont une surface spécifique supérieure ou égale à 100 m$^2$/m$^3$, de préférence supérieure à 125 m$^2$/m$^3$ et un pourcentage de vide supérieur à 90%, de préférence supérieur à 95%, ce réacteur présentant de plus au moins l'une des caractéristiques supplémentaires suivantes résidant dans **le fait que** :

   - des moyens propres à permettre l'obtention d'une circulation en boucle des effluents à l'intérieur d'au moins l'une des cuves sont prévus,
   - les moyens d'aération permettant de maintenir dans le milieu, c'est à dire dans les eaux chargées, une concentration en oxygène supérieure à 6ppm, de préférence supérieure à 7,5ppm,
   - des moyens de neutralisation de l'acidité du milieu réactionnel, autrement dit de réglage de la valeur du pH en cours de réaction sont prévus.

2. Réacteur biologique à lit fixé immergé selon la revendication 1, **caractérisé par le fait qu'**il comporte de deux à six cuves, de préférence quatre cuves et plus préférentiellement encore trois cuves, placées en série et des moyens propres à permettre le passage des effluents d'une cuve vers la cuve suivante.

3. Réacteur biologique à lit fixé immergé selon la revendication 1 ou la revendication 2, **caractérisé par le fait que** les supports de bactéries sont des supports plastiques en vrac.

4. Réacteur biologique à lit fixé immergé selon la revendication 3, **caractérisé par le fait que** les supports sont des écuvillons

5. Réacteur biologique à lit fixé immergé selon l'une quelconque des revendications 2 à 4, **caractérisé par le fait qu'**il comporte trois cuves placées en série, chacune des cuves étant dotée de supports de bactéries constitués de goupillons et comportant des moyens d'aération disposés dans la partie inférieure de la cuve, qui permettent de maintenir une concentration en oxygène de l'ordre de 8ppm dans le milieu,
   la première cuve étant dotée de moyens propres à permettre l'obtention d'une circulation en boucle des effluents à traiter,
   des moyens de neutralisation de l'acidité des effluents étant prévus entre la première et la seconde cuve,
   les effluents étant amenés à passer de la première cuve à la seconde cuve par sur-verse ou sous-verse,
   les effluents étant amenés à passer de la seconde cuve vers la troisième cuve par sous-verse ou sur-verse.

6. Procédé biologique de traitement d'effluents liquides chargés en polluants, selon lequel les effluents à traiter sont placés dans un réacteur biologique à lit fixe complètement immergé comprenant des moyens d'aération des effluents et sont mis en contact avec des bactéries capables de digérer les polluants **caractérisé par le fait que** les bactéries peuvent proliférer sur des supports présents dans le réacteur, lesdits supports présentant simultanément une surface spécifique supérieure ou égale à 100m$^2$/m$^3$, de préférence supérieure ou égale à 125m$^2$/m$^3$ et un pourcentage de vide supérieur à 90%, de préférence supérieur à 95%.

7. Procédé selon la revendication 6, **caractérisé par le fait que** les effluents chargés à traiter sont additionnés d'oxygène à une concentration supérieure à 6 ppm, de préférence supérieure à 7,5 ppm.

8. Procédé selon la revendication 6 ou la revendication 7, **caractérisée par le fait que** le pH du milieu réactionnel est réglé en cours de réaction.

**Patentansprüche**

1. Biologischer Reaktor mit eingetauchtem Festbett, der mindestens einen Behälter umfasst, der für die Befüllung mit aufzubereitenden Abwässern bestimmt ist, in die Bakterienträger vollständig eingetaucht werden, wobei dieser Reaktor, der mit Belüftungsmitteln versehen ist, die im unteren Bereich des Behälters angeordnet sind, **dadurch gekennzeichnet ist, dass** die Bakterienträger eine spezifische Oberfläche von über oder gleich 100 m$^2$/m$^3$, vorzugsweise über 125 m$^2$/m$^3$ und einen Hohlraumanteil von über 90 %, vorzugsweise über 95 % haben, wobei dieser Reaktor femer mindestens eines der folgenden zusätzlichen Merkmale aufweist, die darin bestehen, dass:

- Mittel vorgesehen sind, die geeignet sind, einen geschlossenen Kreislauf der Abwässer innerhalb mindestens eines der Behälter zu ermöglichen,
- die Belüftungsmittel die Aufrechterhaltung einer Sauerstoffkonzentration von über 6ppm, vorzugsweise über 7,5ppm in dem Milieu, d.h. in dem belasteten Wasser, erlauben,
- Mittel zur Neutralisierung der Azidität des Reaktionsmilieus, mit anderen Worten zur Regulierung des pH-Werts während der Dauer der Reaktion vorgesehen sind.

2. Biologischer Reaktor mit eingetauchtem Festbett nach Anspruch 1, **dadurch gekennzeichnet, dass** er zwei bis sechs Behälter, vorzugsweise vier und noch besser drei Behälter umfasst, die hintereinander angeordnet sind, sowie Mittel, die geeignet sind, die passage der Abwässer von einem Behälter in den nächsten zu erlauben.

3. Biologischer Reaktor mit eingetauchtem Festbett nach Anspruch 1 oder 2, **dadurch gekennzeichnet, dass** die Bakterienträger lose Kunststoffträger sind.

4. Biologischer Reaktor mit eingetauchtem Festbett nach Anspruch 3, **dadurch gekennzeichnet, dass** die Träger Rohrbürsten sind.

5. Biologischer Reaktor mit eingetauchtem Festbett nach einem der Ansprüche 2 bis 4, **dadurch gekennzeichnet, dass** er drei hintereinander angeordnete Behälter umfasst, wobei jeder Behälter mit aus Flaschenbürsten bestehenden Bakterienträgern bestückt ist und Belüftungsmittel aufweist, die im unteren Teil des Behälters angeordnet sind und die Aufrechterhaltung eines Sauerstoffgehalts von etwa 8ppm in dem Milieu ermöglichen,
wobei der erste Behälter mit Vorrichtungen versehen ist, die geeignet sind, einen geschlossenen Kreislauf der aufzubereitenden Abwässer zu erlauben,
wobei Mittel zur Neutralisierung der Azidität der Abwässer zwischen dem ersten und zweiten Behälter vorgesehen sind,
wobei die Abwässer durch Unter- oder Überlauf aus dem ersten in den zweiten Behälter geleitet werden,
wobei die Abwässer durch Unter- oder Überlauf aus dem zweiten in den dritten Behälter geleitet werden.

6. Biologisches Verfahren zur Aufbereitung schadstoffbeladener Abwässer, nach dem die aufzubereitenden Abwässer in einen biologischen Reaktor mit vollständig eingetauchtem Festbett geleitet werden, der Mittel zur Belüftung der Abwässer umfasst, und in Kontakt mit Bakterien gebracht werden, die geeignet sind, die Schadstoffe zu zersetzen, **dadurch gekennzeichnet, dass** die Bakterien auf Trägern aufwachsen können, die in dem Reaktor vorhanden sind, wobei die Träger gleichzeitig eine spezifische Oberfläche von $100 m^2/m^3$ oder größer, vorzugsweise $125 m^2/m^3$ oder größer, und einen Hohlraumanteil über 90%, vorzugsweise über 95 % aufweisen.

7. Verfahren nach Anspruch 6, **dadurch gekennzeichnet, dass** den schadstoffbeladenen, aufzubereitenden Abwässer Sauerstoff mit einer Konzentration von über 6 ppm, vorzugsweise über 7,5 ppm, zugesetzt wird.

8. Verfahren nach Anspruch 6 oder 7, **dadurch gekennzeichnet, dass** der pH-Wert des Reaktionsmilieus während der Dauer der Reaktion reguliert wird.

**Claims**

1. Immersed fixed-bed biological reactor comprising at least one tank intended to be filled with effluents to be treated in which supports for bacteria are completely immersed, said reactor, which is equipped with aeration means arranged in the lower part of the tank, being **characterised by** the fact that the supports for bacteria have a specific surface greater than or equal to $100 m^2/m^3$, preferably greater than $125 m^2/m^3$, and a percentage of empty space greater than 90%, preferably greater than 95%, said reactor having furthermore at least one of the following additional features **characterised in** the fact that:

- means that allow the formation of a loop-type circulation of the effluents inside of at least one of the tanks, are provided,
- the aeration means enable a concentration of oxygen greater than 6 ppm, preferably greater than 7.5 ppm, to be maintained in the medium, that is to say in the charged waters,
- means that neutralise the acidity of the reaction medium, in other words means that regulate the pH value during the course of the reaction, are provided.

**2.** Immersed fixed-bed biological reactor according to claim 1, **characterised by** the fact that it comprises from two to six tanks, preferably four tanks and more particularly preferably three tanks, arranged in series, and means that allow the passage of the effluents from one tank to the following tank.

**3.** Immersed fixed-bed biological reactor according to claim 1 or claim 2, **characterised by** the fact that the supports for bacteria are loose plastics supports.

**4.** Immersed fixed-bed biological reactor according to claim 3, **characterised by** the fact that the supports are stiff brushes.

**5.** Immersed fixed-bed biological reactor according to any one of claims 2 to 4, **characterised by** the fact that it comprises three tanks arranged in series, each of the tanks being equipped with supports for bacteria consisting of sprinklers and comprising aeration means arranged in the lower part of the tank that enables a concentration of oxygen of the order of 8 ppm to be maintained in the medium,
the first tank being equipped with means allowing the formation of a loop-type circulation of the effluents to be treated,
means for neutralising the acidity of the effluents being provided between the first and the second tanks,
the effluents being caused to pass from the first tank to the second tank by flow from above or from underneath,
the effluents being caused to pass from the second tank to the third tank by flow from above or from underneath.

**6.** Biological process for treating liquid effluents charged with pollutants, according to which the effluents to be treated are added to a completely immersed fixed-bed biological reactor comprising aeration means for the effluents and are brought into contact with bacteria capable of digesting the pollutants, **characterised by** the fact that the bacteria can multiply on supports present in the reactor, the said supports having both a specific surface greater than or equal to 100 $m^2/m^3$, preferably greater than or equal to 125 $m^2/m^3$, and a percentage of empty space greater than 90%, preferably greater than 95%.

**7.** Process according to claim 6, **characterised by** the fact that oxygen is added to the charged effluents to be treated in a concentration greater than 6 ppm, preferably greater than 7.5 ppm.

**8.** Process according to claim 6 or claim 7, **characterised by** the fact that the pH of the reaction medium is regulated during the course of the reaction.

FIG.1.

EP 1 301 440 B1

FIG.2.